# EUROPEAN PATENT SPECIFICATION

(11) **EP 1 860 855 B1**
(45) Date of publication and mention of the grant of the patent: **10.05.2017**
(21) Application number: 07010357.7
(22) Date of filing: 24.05.2007
(51) Int. Cl.: H04M 1/725, G06Q 10/00

(54) **Mobile communication terminal and a method for managing messages**
Mobiles Kommunikationsendgerät und Verfahren zur Verwaltung von Nachrichten
Terminal de communication mobile et procédé de gestion de messages

(30) Priority: 26.05.2006 KR 20060047835
(43) Date of publication of application: 28.11.2007
(73) Proprietor: LG ELECTRONICS INC., Yeongdeungpo-gu Seoul 150-721 (KR)
(72) Inventor: Lee, Hak Kyun, Mungyeong-si, Gyeongsangbuk-do (KR)
(74) Representative: Katérle, Axel

(56) References cited:
- EP-A1- 1 650 638
- US-A1- 2003 064 707
- US-A1- 2005 210 146

## Description

### FIELD OF THE INVENTION

The present invention relates to a mobile communication terminal and a method for managing messages.

### DESCRIPTION OF THE RELATED ART

Recently, terminals such as a mobile communication terminal have been frequently used for composing and saving messages including text messages and e-mails, and transmitting the composed messages.

The messages have been integrated and managed in message boxes including an Inbox, a Sent box, a Draft box, and others.

Usually, upon entry into a message box, the message box receives data from several databases where the messages are stored, and the message box then forms all of the messages from the received data.

Therefore, since a message box has a data structure pertaining to all of the messages, the access time to the message box increases significantly when many messages are in the message box, thereby diminishing the performance of the terminal.

US 2003/0064707 A1 may be construed to disclose a method for managing messages for a mobile communication device. In the method, each message is associated with received or sent date, wherein a plurality of messages is included in a screen, and the plurality of messages is displayed.

US 2005/0210146 A1 may be construed to disclose a cellular phone for editing and transmitting/receiving an e-mail, wherein an e-mail list is shown on the screen.

### SUMMARY OF THE INVENTION

Accordingly, the present invention solves the above-mentioned problems occurring in the prior art, and an object of the present invention is to provide a mobile communication terminal and a method for managing messages that can reduce an access time to a message box.

Additional advantages, objects and features of the invention will be set forth in the description which follows and will become apparent to those having ordinary skill in the art upon examination of the following or may be learned from practice of the invention.

In one aspect of the present invention, a method according to claim 1 is provided.

In another aspect of the present invention, a mobile communication terminal according to claim 10 is provided. Developments are set forth in the respective dependent claims.

### BRIEF DESCRIPTION OF THE DRAWINGS

The above and other objects, features and advantages of the present invention will be more apparent from the following detailed description taken in conjunction with the accompanying drawings.
FIG. 1 is a block diagram of a mobile communication terminal according to one aspect of the present invention.
FIG. 2 is a flow chart of a method for managing messages according to another aspect of the present invention.
FIGS. 3a to 3d show a configuration of a message box, when messages enter a first message box and additional messages are sequentially added.
FIG. 4 illustrates the relationship between the number of messages in a message box and the entry time into the message box.

### DETAILED DESCRIPTION

The aspects and features of the present invention and methods for achieving the aspects and features will be apparent by referring to the following description with reference to the accompanying drawings. However, the present invention is not limited to the disclosed aspects, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

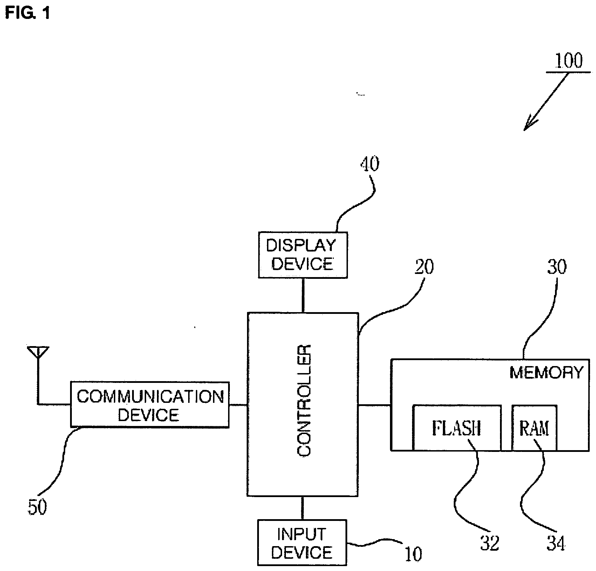

FIG. 1 illustrates the constitution of a mobile communication terminal according to an aspect of the present invention. The mobile communication terminal 100 comprises an input device 10, a controller 20, a memory 30, a display 40 and a communication device 50.

Characters, numerals, special characters, and symbols are inputted using the input device 10. The input device 10 also is used for providing messages to and managing the messages and a message box. Further, the input device 10 has function keys for controlling the terminal 100 and one or more message boxes.

The messages may be text messages, multimedia messages and email messages, and may be also received messages, sent messages or draft messages. The messages of the present invention are not limited to any particular kind or form of messages.

A user can access a message box and select messages using the input device 10. For example, eight messages may be selected; the four most recent and the four oldest messages. Each message is associated with an authoring date, wherein the authoring date is the date and time of a sent or received message, or the date and time a message was composed and saved as a draft message. The authoring date is displayed in a message list of the accessed message box.

The controller 20 continuously stores information on the selected messages and generates a data structure of the message box according to the authoring date. In other words, the controller 20 has a data structure of a linked list so that the messages in the message box are sequentially fetched.

Upon a receipt of a request to display additional messages through the input device 10, the controller 20 sequentially adds the additional messages to the data structure of the message box. For example, upon a receipt of an additional message request for messages that have been authored after the authoring date of currently displayed messages, the controller 20 sequentially adds additional messages to the message box.

The controller 20 generates a message box data structure so that all of the messages connect to each other in a form of a loop. For example, if there are 30 messages in the message box, the controller 20 forms the message box in which the 30 messages connect to each other in the form of a loop. If three messages are added to the 30 messages, the controller 20 forms the message box in which the 33 messages connect to each other in the form of the loop.

The memory 30 stores the message box that is generated by the controller 20. The memory 30 comprises a flash memory 32, in which data pertaining to all of the messages are stored, and a RAM 34 for storing a message box data base generated by using the selected data pertaining to the messages under the control of the controller 20. If messages are added to the message box under the control of the controller 20, the memory 30 stores the message box including the added messages.

When a first message box has been generated, upon entry into the message box through the input device 10, a list of all or some of the messages generated in the message box is displayed on the display 40. Consequently, the controller 20 forms the first message box with messages that can be suitably displayed on one screen of the display 40. For example, the controller 20 forms the first message box with eight messages, i.e., four of the most recent messages and four of the oldest messages. The display 40 displays lists of the messages of the message box.

Likewise, since the first message box is only configured of messages that can be suitably displayed on one screen of the display 40 rather than configured from all the messages, an access time to the message box may be improved, and thus an entry time into the message box may be shortened.

Moreover, when one of the displayed messages is selected using the input device 10, the display 40 displays all information on the selected message; for example, an author, an authoring date, a sent/received time, the message contents, an order of message lists, a phone number, or a message address. The display 40 may also display the selected messages, according to various classification standards such as alphabetical order of authors, order of the authoring dates, alphabetical order of message contents, order of message lists, order of phone numbers, or order of the message addresses.

When the messages are added to the message box, the display 40 displays the message list including the added messages. The display 40 also displays the message list continuously, when all of the messages are added to the message box and connect to each other in the form of the loop.

The display 40 may be implemented, for example, with a LCD, an OLED, a PDP and a VFD.

The communication device 50 sends and receives voice or data communications. The communication device 50 receives the messages of the message box or transmits the messages to a third party via a mobile communication network. The messages sent or received by the communication device 50 are stored in the flash memory 32 of the memory 30 under the control of the controller 20.

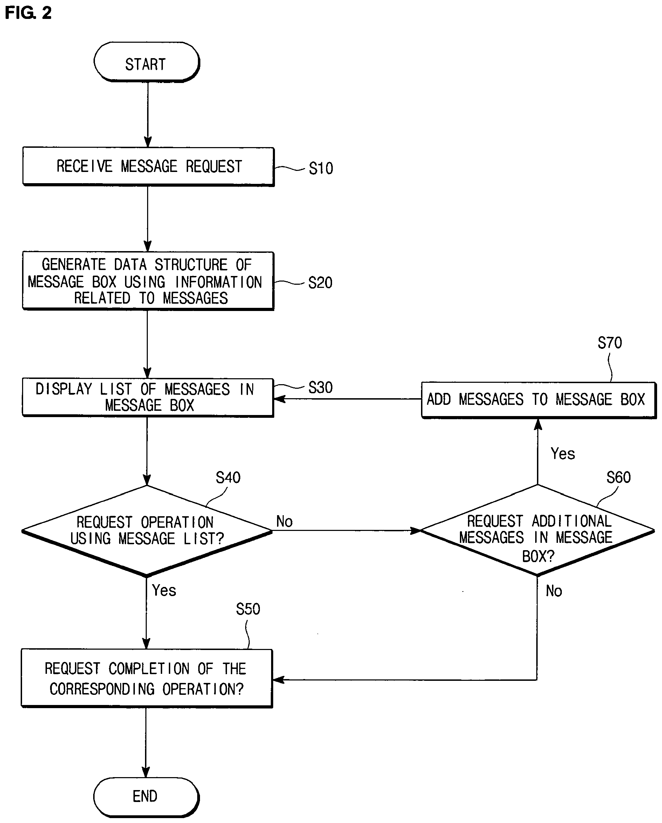

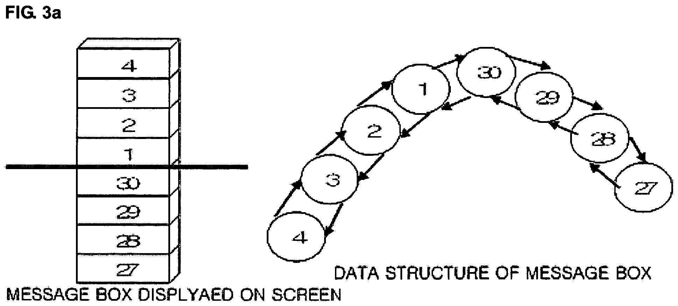

FIG. 2 illustrates a method for managing messages according to another aspect of the present invention, and FIGS. 3a to 3d show configuration of a message box, when the messages enter a first message box and are sequentially added to a message box.

Referring to FIG. 2, the method for managing messages may be not only implemented in a mobile communication terminal 100 shown in FIG. 1, but also in a personal computer, a personal digital assistant (PDA), a cellular phone, a personal communication service (PCS), a global system for mobile (GSM), a wideband CDMA (W-CDMA), a CDMA-2000 phone, a mobile broadband system (MBS), and other devices displaying a message list.

Referring to FIGS. 2 and 3a, the method for managing messages selects a number of messages from the total number of messages upon a receipt of a message request S10. The selected messages may be suitably displayed on one screen. Also, the selected messages may be a number of the most recent messages (1 st to 4th messages shown in FIG. 3a) and a number of the oldest messages (27th to 30th messages shown in FIG. 3a). The number of messages that are displayed is dependent upon the size of the display, the font size of the displayed information, and the users preferences.

Next, data pertaining to the selected messages is continuously stored to generate the data structure of the message box in order of authoring dates S20.

In the example shown in FIG. 3a, eight messages of the message box are linked list so as to be sequentially fetched. For example, the messages of 4->3->2->1->30->29->28->27 are linked in the message box in order and reverse order, as shown in FIG. 3a. Accordingly, the message box may fetch the messages in order and reverse order using the data structure of the linked list.

Referring to FIG. 2, when the first message box has been generated, a list of messages in the message box generated is displayed on the screen 40 upon entry into the message box S30.

Consequently, when the first message box has been generated, the first message box is formed of only messages that can be suitably displayed on the screen. Accordingly, the access time to the message box is improved, thereby allowing the entry time into the message box to be shortened.

If one of the lists of the displayed messages is selected, information on the selected messages is displayed; for example, message author, authoring or transmitted/received time, message contents, order of message lists, telephone number or message address. The lists of the selected messages may be displayed according to various kinds of classification standards such as alphabetical order of authors or message contents, order of message lists, order of telephone numbers, order of message addresses, and order of authoring dates.

Next, when an operation related to various kinds of messages is requested using the displayed message lists, for example, when a reply to a received message is requested, the corresponding operation is performed and then completed S40 and S50.

Referring again to FIG. 2, upon a receipt of a request to display additional messages, additional messages are added to the message box S60. The additional message request may be performed using a directional key, for example, an up key or a down key on the input device shown in FIG. 1.

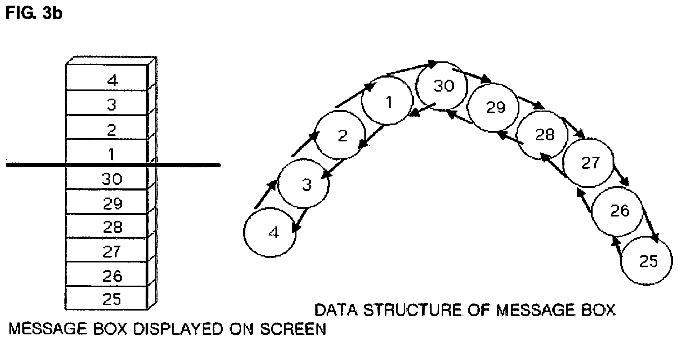

Referring to FIGS. 2 and 3b, when messages (for example, 25th and 26th messages) authored earlier than the 27th message are requested, including four of the most recent messages (1st to 4th messages shown in FIG. 3b) and four of the oldest messages (27th to 30th messages shown in FIG. 3b) based on the authoring date, the 25th and 26th messages are sequentially added to the message box. Messages 4->3->2->1->30->29->28->27->26->25 are linked to the message box in order and reverse order, as shown in FIG. 3b.

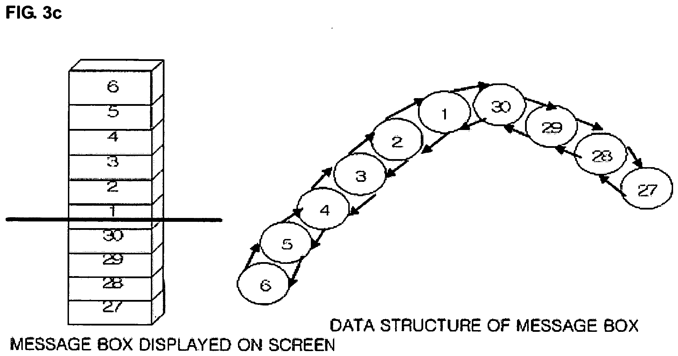

Referring to FIGS. 2 and 3c, when messages (for example, 5th and 6th messages shown in FIG. 3c) followed by the 4th message are sequentially requested, the 5th and 6th messages are added to the message box. Messages of 6->5->4->3->2->1->30->29->28->27 are linked to the message box in order and reverse order, as shown in FIG. 3c.

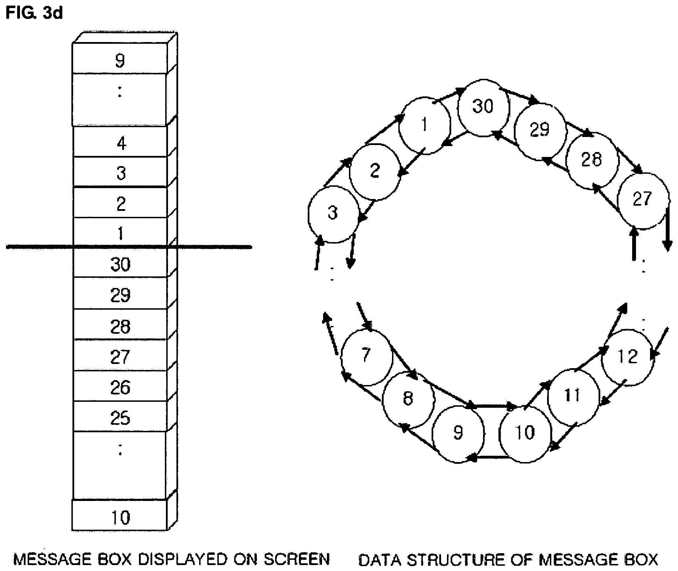

Referring to FIGS. 2 and 3d, when all of the messages are added, the data structure of the message box is formed, connecting all of the messages to each other in the form of the loop. For example, if there are 30 messages, the message box is formed so that 30 messages connect to each other in the form of the loop that is circularly linked in order of 3->2->1->30->29->28->27...->12->11->10->9->8->7...and in inverse order. Accordingly, if 30 messages are selected in order, 30 messages can continuously connect to each other in a circle. If three messages are added to the 30 messages, the message box is formed so that 33 messages connect to each other in the form of the loop.

If messages are added to the message box in step S70, a list of messages including messages added in step S30 are displayed. Moreover, if all of the messages are added to the message box and connected to each other in the form of the loop, the list of messages is continuously displayed on the display 40.

Upon a receipt of a display request for messages that are not in the message box, the requested message lists may be displayed, after the requested messages are sequentially added to the message box.

### Comparative example

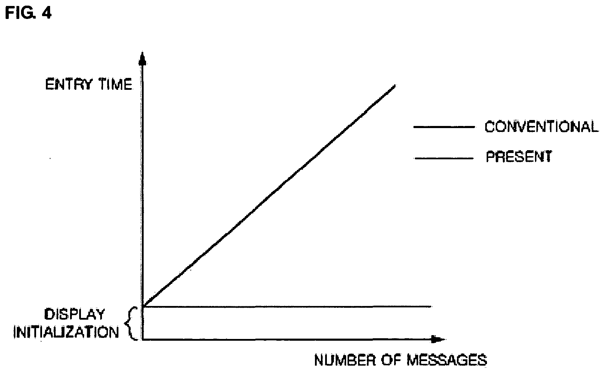

FIG. 4 is a graph illustrating a relationship between the number of messages and an entry time into a message box. The X-axis of FIG. 4 denotes the number of messages, and the Y-axis denotes the entry time into message box.

In FIG. 4, the relationship between the number of messages and the entry time into the message box in the mobile communication terminal 100 according to the present invention is compared to that of the conventional mobile communication terminal. The term "the entry time into the message box" means the time to obtain data pertaining to the messages from memory, to form a data structure of the message box, and to display the list of messages on a screen of the display 40, when the user is enters the message box.

In order to explain the difference of "entry time" between the mobile communication terminal 100 of the present invention and that of the prior art, a maximum number of messages is 9,600 in a message box is assumed. Further, in the method for managing messages according to the present invention, when the user requests the message box, the number of messages displayed in the message box is assumed to be eight

Referring to FIG. 4, in the mobile communication terminal according to the conventional method for managing messages, a large portion of the entry time into the message box was used to generate the message box after a basic initialization process. Accordingly, a time necessary for displaying the message list of the message box linearly increases in proportion to the total number of messages in the message box. When the total number of messages is 9,600, the entry time into the message box was 70 seconds.

On the other hand, in the mobile communication terminal 100 of the present invention, the entry time into the message box was only one second because the number of displayed messages is eight regardless of the total number of messages. Likewise, the entry time into the message box is nearly the same as the basic initialization time.

As described above, aspects of the present invention are explained, but not limited to the above description.

In the above-described invention, the number of messages in the initial message box is explained as that of the messages suitable for displaying messages on one screen, but not be limited thereto. According to the present invention, the number of messages comprised in the initial message box must be fewer than the number of messages to be displayed on the screen. However, if the number of messages of the initial message box is greater or fewer than the number of the messages to be displayed on one screen, the entry time into the initial message box can be sufficiently reduced.

The message box having a specific number of messages may be formed when booting or a specific time after the booting (for example, upon the receipt of the message display request) and the message lists may be displayed on the basis of the message box.

As described above, the mobile communication terminal and the method for managing messages in the mobile communication terminal, according to the present invention, can improve the access time to the message box. Therefore, the entry time into the message box can be reduced.

The embodiments of the present invention have been described for illustrative purposes, and those skilled in the art will appreciate that various modifications, additions and substitutions are possible without departing from the scope of the invention as disclosed in the accompanying claims. Therefore, the scope of the present invention should be defined by the appended claims.

## Claims

1. A message managing method for a mobile communication device (100), the method comprising:
selecting, upon receipt of a message request (S10), a specific number of messages from a total number of messages stored in a memory (30) of the mobile communication device, wherein the specific number is set as a number that allows the selected messages to be displayed on one screen of a display device (40) of the mobile communication device (100); generating (S20) an initial message box containing only the selected messages, wherein the message box is formed as a data structure sequentially linking the messages in the message box according to a send or receive date associated with each message; and
displaying (S30) the selected messages contained in the initial message box on the screen of the display device (40) of the mobile communication device (100).

2. The method of claim 1, wherein the messages are at least one of text messages, multimedia messages, and e-mail messages.

3. The method of claim 2, wherein the messages are at least one of received messages, sent messages, and deferred messages.

4. The method of claim 1, wherein the selected messages comprise a plurality of most recent messages and a plurality of oldest messages.

5. The method of claim 4, wherein the message box is generated in a mobile communication terminal (100).

6. The method of claim 4, wherein the messages contained in the message box are displayed in a time sequence according to the send or receive date of each message.

7. The method of claim 3 further comprising:
adding (S70) at least one additional message to the messages in the message box upon the receipt of an additional message request; and
displaying (S30) the messages in the message box.

8. The method of claim 7, wherein the message box is formed so that each of the displayed messages is connected by the data structure to a next message to thereby form a loop.

9. The method of any one preceding claim, wherein the total number of messages are stored in a flash memory (32) and the data structure of the message box is stored in a RAM (34).

10. A mobile communication terminal (100) comprising means configured to carry out a method as defined in any preceding claim.

## Patentansprüche

1. Verfahren zur Nachrichtenverwaltung für eine mobile Kommunikationsvorrichtung (100), wobei das Verfahren umfasst:
Auswählen einer bestimmten Anzahl von Nachrichten aus einer in einem Speicher (30) der mobilen Kommunikationsvorrichtung gespeicherten Gesamtanzahl von Nachrichten auf den Empfang einer Nachrichtenanforderung (S10) hin, wobei die bestimmte Anzahl als eine Anzahl festgelegt ist, die ein Anzeigen der ausgewählten Nachrichten auf einem Bildschirm einer Anzeigevorrichtung (40) der mobilen Kommunikationsvorrichtung (100) ermöglicht;
Erzeugen (S20) eines lediglich die ausgewählten Nachrichten enthaltenden anfänglichen Nachrichtenfachs, wobei das Nachrichtenfach als eine Datenstruktur ausgebildet ist, die die Nachrichten in dem Nachrichtenfach gemäß einem mit der jeweiligen Nachricht assoziierten Sende- oder Empfangsdatum fortlaufend verknüpft; und
Anzeigen (S30) der in dem anfänglichen Nachrichtenfach enthaltenen ausgewählten Nachrichten auf dem Bildschirm der Anzeigevorrichtung (40) der mobilen Kommunikationsvorrichtung (100).

2. Verfahren nach Anspruch 1, wobei die Nachrichten zumindest Textnachrichten oder Multimedianachrichten oder E-Mail-Nachrichten sind.

3. Verfahren nach Anspruch 2, wobei die Nachrichten zumindest empfangene Nachrichten oder gesendete Nachrichten oder zurückgestellte Nachrichten sind.

4. Verfahren nach Anspruch 1, wobei die ausgewählten Nachrichten eine Mehrzahl von neuesten Nachrichten und eine Mehrzahl von ältesten Nachrichten umfassen.

5. Verfahren nach Anspruch 4, wobei das Nachrichtenfach in einem mobilen Kommunikationsendgerät (100) erzeugt wird.

6. Verfahren nach Anspruch 4, wobei die in dem Nachrichtenfach enthaltenen Nachrichten in einer zeitlichen Reihenfolge gemäß dem Sende- oder Empfangsdatum der jeweiligen Nachrichten angezeigt werden.

7. Verfahren nach Anspruch 3, des Weiteren umfassend:
Hinzufügen (S70) von zumindest einer zusätzlichen Nachricht zu den Nachrichten in dem Nachrichtenfach auf den Empfang einer zusätzlichen Nachrichtenanforderung hin; und
Anzeigen (S30) der Nachrichten in dem Nachrichtenfach.

8. Verfahren nach Anspruch 7, wobei das Nachrichtenfach derart ausgebildet ist, sodass jede der angezeigten Nachrichten durch die Datenstruktur mit einer nächsten Nachricht verbunden ist, um dadurch eine Schleife zu erzeugen.

9. Verfahren nach einem der vorhergehenden Ansprüche, wobei die Gesamtanzahl von Nachrichten in einem Flash-Speicher (32) gespeichert sind und die Datenstruktur des Nachrichtenfachs in einem RAM (34) gespeichert ist.

10. Mobiles Kommunikationsendgerät (100), das Mittel umfasst, die zum Durchführen des Verfahrens nach einem der vorhergehenden Ansprüche eingerichtet sind.

## Revendications

1. Procédé de gestion de messages pour un dispositif de communication mobile (100), le procédé comprenant les étapes consistant à :
sélectionner, sur réception d'une demande de message (S10), un nombre spécifique de messages à partir d'un nombre total de messages stockés dans une mémoire (30) du dispositif de communication mobile, dans lequel le nombre spécifique est établi comme un nombre qui permet que les messages sélectionnés soient affichés sur un écran d'un dispositif d'affichage (40) du dispositif de communication mobile (100) ;
générer (S20) une boîte à messages initiaux contenant uniquement les messages sélectionnés, dans lequel la boîte à messages est formée comme une structure de données reliant séquentiellement les messages dans la boîte à messages conformément à une date d'envoi ou de réception associée à chaque message ; et
afficher (S30) les messages sélectionnés contenus dans la boîte à messages initiaux sur l'écran du dispositif d'affichage (40) du dispositif de communication mobile (100).

2. Procédé selon la revendication 1, dans lequel les messages sont au moins l'un parmi des messages textuels, des messages multimédias, et des messages de courrier électronique.

3. Procédé selon la revendication 2, dans lequel les messages sont au moins l'un parmi des messages reçus, des messages envoyés, et des messages différés.

4. Procédé selon la revendication 1, dans lequel les messages sélectionnés comprennent une pluralité des messages les plus récents et une pluralité des messages les plus anciens.

5. Procédé selon la revendication 4, dans lequel la boîte à messages est générée dans un terminal de communication mobile (100).

6. Procédé selon la revendication 4, dans lequel les messages contenus dans la boîte à messages sont affichés dans une séquence temporelle selon la date d'envoi ou de réception de chaque message.

7. Procédé selon la revendication 3, comprenant en outre les étapes consistant à :
ajouter (S70) au moins un message supplémentaire aux messages dans la boîte à messages sur réception d'une demande de message supplémentaire ; et
afficher (S30) les messages dans la boîte à messages.

8. Procédé selon la revendication 7, dans lequel la boîte à messages est formée de sorte que chacun des messages affichés est relié par la structure de données à un message suivant pour de ce fait former une boucle.

9. Procédé selon l'une quelconque des revendications précédentes, dans lequel le nombre total de messages est stocké dans une mémoire flash (32) et la structure de données de la boîte à messages est stockée dans une RAM (34).

10. Terminal de communication mobile (100) comprenant un moyen configuré pour mettre en oeuvre un procédé tel que défini dans l'une quelconque des revendications précédentes.
